# EUROPEAN PATENT SPECIFICATION

(11) **EP 3 321 139 B1**
(45) Date of publication and mention of the grant of the patent: **08.01.2020**
(21) Application number: 16198695.5
(22) Date of filing: 14.11.2016
(51) Int. Cl.: B60R 21/36

(54) **A PEDESTRIAN AIRBAG ARRANGEMENT**
FUSSGÄNGERAIRBAGANORDNUNG
SYSTÈME DE COUSSIN DE SÉCURITÉ GONFLABLE POUR PIÉTONS

(43) Date of publication of application: 16.05.2018
(73) Proprietor: Autoliv Development AB, 447 83 Vårgårda (SE)
(72) Inventor: ÖSTLING, Martin, 507 33 Brämhult (SE); RANJBAR, Mehrdad, 44193 Alingsås (SE); FREDRIKSSON, Rikard, 52131 Falköping (SE)
(74) Representative: Mewburn Ellis LLP

(56) References cited:
- EP-A1- 2 502 794
- WO-A1-2016/075108
- DE-B3-102013 010 394

## Description

The present invention relates to a pedestrian airbag arrangement, and more particularly relates to a motor vehicle provided with a pedestrian airbag arrangement.

When a motor vehicle is involved in a frontal impact with a pedestrian, it is known to be common for the body of the pedestrian to strike the windscreen of the vehicle which can result in serious injury to the pedestrian and significant damage to the vehicle which can result in injury to the vehicle occupants. In an attempt to alleviate this, it has been proposed previously to provide a motor vehicle with a so-called pedestrian airbag of a type which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood (sometimes referred to as the vehicle's bonnet), for inflation in a generally rearwards direction across the windscreen. The rear of the hood may be lifted by another air-bag, a piston or another arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Another advantage of lifting the hood in such a situation is that the hood will become spaced above the engine block and other hard objects in the vehicle's engine bay, such that the hood can then deform upon impact with the pedestrian, thereby absorbing impact energy. Alternatively, it has also been proposed to configure the pedestrian airbag such that as it begins to inflate upon actuation it performs the hood-lifting function itself.

As will be appreciated, however, the windscreen of a motor vehicle is typically spaced rearwardly from the front end of the motor vehicle, and in particular the front bumper of the motor vehicle, which is the part of the motor vehicle which is most likely initially to strike a pedestrian in the event of a collision therewith. This means that the body of a person struck by the front end region of a motor vehicle will move over the hood or bonnet of the vehicle, before impacting with a conventional pedestrian airbag which has been deployed in readiness across the windscreen of the vehicle. A conventional pedestrian airbag of the aforementioned type must therefore be of sufficient thickness to absorb a very significant amount of energy, due to the momentum of the pedestrian's body, upon impact by the pedestrian.

The present inventors have discovered that a reconfigured pedestrian airbag, which is specifically designed to deploy forwardly of the windscreen and/or the rear part of a motor vehicle's hood/bonnet, can provide an improved performance in preventing serious injury to a pedestrian, due to the fact that such an airbag will couple with the pedestrian at an earlier instant during a collision therewith.

Another problem that has been experienced with conventional pedestrian airbags which simply deploy over and across the windscreen of a motor vehicle, is that they often do not adequately "catch" a pedestrian who has been struck by the motor vehicle in an oblique manner. In an oblique collision between a motor vehicle and a pedestrian, it is common for the pedestrian's body to move somewhat diagonally over the vehicle's bonnet before making oblique contact with the pedestrian airbag. In such a situation, it is not uncommon for the pedestrian's body to make only brief glancing contact with the airbag, before then sliding off one end of the airbag and falling to the ground adjacent the motor vehicle, where the pedestrian could then be it risk of injury from secondary impacts with other objects such as road furniture or even other motor vehicles. Even in the event that the pedestrian's body might not actually slide off the end of a conventional pedestrian airbag, oblique contact between a pedestrian and a conventional pedestrian airbag can cause the airbag to become deflected out of its intended deployed position, thereby leaving the pedestrian at increased risk of injury through impact with the vehicle's windscreen and/or A-pillar. In an extreme oblique impact, it is even possible for a pedestrian's body to move diagonally across the hood or bonnet of the vehicle and slide off the edge thereof without ever making any contact with the airbag at all, due to the fact that the airbag extends only across the vehicle's windscreen.

Another problem associated with conventional pedestrian airbags of the type described above is that they sometimes offer inadequate protection to a pedestrian from impact with the hood or bonnet of the motor vehicle. Although such airbag arrangements are often provided in combination with a hood-lifting arrangement, or even serve a hood-lifting function themselves to raise the hood and thereby increase the space between the hood and the vehicle's engine block located therebelow, this is not always successful in preventing injury to the pedestrian from impact with the hood/bonnet of the vehicle.

WO 2016/075108 A1 discloses a safety arrangement for use with a vehicle, the arrangement comprising a hood, a windscreen and a pedestrian airbag arrangement; the airbag arrangement having an airbag defining an inflatable volume for the receipt of inflating gas; said inflatable volume comprising: a primary chamber configured for inflation upon deployment of the airbag so as to adopt an inflated position in which it stands generally upwardly from the motor vehicle and extends transversely across the motor vehicle; and a pair of secondary chambers configured for inflation upon deployment of the airbag so as to adopt respective inflated positions in which they: i) extend generally rearwardly from the primary chamber in spaced relationship to one another and at respective opposite sides of the motor vehicle; and ii) terminate adjacent respective opposite side regions of the motor vehicle's structure.

It is an object of the present invention to provide a motor vehicle with an improved pedestrian airbag arrangement.

According to the present invention, there is provided a motor vehicle having a hood, a windscreen and a pedestrian airbag arrangement; the airbag arrangement having an airbag defining an inflatable volume for the receipt of inflating gas; said inflatable volume comprising: a primary chamber configured for inflation upon deployment of the airbag so as to adopt an inflated position in which it stands generally upwardly from a front region of the motor vehicle and extends transversely across the motor vehicle such that an uppermost region of the primary chamber is spaced above the hood of the vehicle; and a pair of secondary chambers configured for inflation upon deployment of the airbag so as to adopt respective inflated positions in which they: i) extend generally rearwardly from the primary chamber in spaced relationship to one another and at respective opposite sides of the motor vehicle; and ii) terminate adjacent respective opposite side regions of the motor vehicle's structure.

Conveniently, said secondary chambers each extend generally downwardly from said primary chamber when in their respective inflated positions.

Preferably, said secondary chambers each extend outwardly from said primary chamber when in their respective inflated positions, so as to make an acute angle to a longitudinal axis of the motor vehicle.

Advantageously, the airbag is provided packaged in an airbag module proximate a front edge region of the hood.

Optionally, said secondary chambers each extend from a respective upper region of said primary chamber when the primary chamber is in said inflated position.

Conveniently, said secondary chambers are configured to slide outwardly past said respective side regions of the motor vehicle's structure upon rearwards deflection of said primary chamber arising from impact with a pedestrian.

Optionally, said airbag further comprises a roof chamber configured for inflation upon deployment of the airbag so as to extend generally rearwardly from an uppermost region of the primary chamber to adopt an inflated position in which it extends between said secondary chambers; said primary chamber, said roof chamber, and said secondary chambers cooperating to define a void above the vehicle and behind said primary chamber upon deployment of the airbag.

Advantageously, the airbag arrangement further comprises a tether arrangement external to said inflatable volume; the tether arrangement being connected to said primary chamber and to each said secondary chamber, and configured to position said secondary chambers in their said respective inflated positions upon inflation of the airbag.

Conveniently, said tether arrangement is additionally connected to said roof chamber and is configured to position the roof chamber in its said inflated position upon inflation of the airbag.

Optionally, said tether arrangement comprises a plurality of flexible straps.

Alternatively, said tether arrangement comprises a sheet of flexible material which is connected to said chambers along respective side edges of the sheet.

Conveniently, said side regions of the motor vehicle's structure, adjacent which said rearwardly extending secondary chambers terminate when in said inflated positions, are A-pillars of the motor vehicle.

Alternatively, said side regions of the motor vehicle's structure, adjacent which said rearwardly extending secondary chambers terminate when in said inflated positions, are: side edges of the vehicle's hood; or front wings/fenders of the motor vehicle.

Optionally, said airbag arrangement comprises an additional airbag, the additional airbag being configured for inflation upon deployment so as to extend across at least part of the windscreen.

Conveniently, said additional airbag defines an inflatable volume for the receipt of inflating gas and comprises: a main chamber configured for inflation upon deployment of the airbag so as to adopt an inflated position in which it extends transversely across the motor vehicle; and a pair of side chambers configured for inflation upon deployment of the airbag so as to adopt respective inflated positions in which they: i) extend generally rearwardly and/or downwardly from the main chamber in spaced relationship to one another and at respective opposite sides of the motor vehicle; and ii) terminate adjacent respective A-pillars of the motor vehicle.

Advantageously, said side chambers each extend outwardly from said main chamber when in their respective inflated positions, so as to make an acute angle to a longitudinal axis of the motor vehicle.

Preferably, said additional airbag is provided packaged in an airbag module proximate a rear edge region of the hood.

Conveniently, said side chambers are configured to slide outwardly past said respective A-pillars upon rearwards deflection of said main chamber arising from impact with a pedestrian.

Optionally, said additional airbag further comprises a roof chamber configured for inflation upon deployment of the airbag so as to extend generally rearwardly from the main chamber to adopt an inflated position in which it extends between said side chambers; said main chamber, said roof chamber, and said side chambers cooperating to define a void above the windscreen upon deployment of the additional airbag.

Conveniently, said additional airbag further comprises a tether arrangement external to said inflatable volume of the additional airbag; the tether arrangement being connected to said main chamber, and to each said side chamber, and configured to position said side chambers in their said respective inflated positions upon inflation of the additional airbag.

Conveniently, said tether arrangement of the additional airbag is additionally connected to said roof chamber of the additional airbag and is configured to position the roof chamber in its said inflated position upon inflation of the additional airbag.

Optionally, said tether arrangement of the additional airbag comprises a plurality of flexible straps.

Alternatively, said tether arrangement of the additional airbag comprises a sheet of flexible material which is connected to said chambers along respective side edges of the sheet.

So that the invention may be more readily understood, and so that further features thereof may be appreciated, embodiments of the invention will now be described by way of example with reference to the accompanying drawings in which:
Figure 1 is a schematic perspective view, from the front and right-hand side, of a motor vehicle having an pedestrian airbag arrangement in accordance with an embodiment of the present invention, the airbag being illustrated in a deployed position relative to the vehicle, prior to impact between the vehicle and a pedestrian;
Figure 2 is a schematic elevational view showing the deployed position of the airbag from the left-hand side of the motor vehicle;
Figure 3 is a schematic perspective view from the rear and left-hand side, showing the deployed position of the airbag;
Figure 4 is a schematic plan view from above showing the deployed position of the airbag;
Figure 5 is a schematic plan view similar to that of figure 4, illustrating the airbag in its deployed position and immediately prior to impact between the motor vehicle and a pedestrian;
Figure 6 is a schematic side view, illustrating the airbag at the same instant in time as figure 5;
Figure 7 is a schematic plan view similar to that of figure 5, but which shows the pedestrian making contact with the airbag following impact between the motor vehicle and the pedestrian;
Figure 8 is a schematic side view similar to that of figure 6, but which shows the airbag and pedestrian at the same instant in time as figure 7;
Figure 9 is a schematic plan view similar to those of figures 5 and 7, but which shows the pedestrian and the airbag during a subsequent stage in the accident;
Figure 10 is a schematic side view similar to those of figures 6 and 8, but which shows the airbag and the pedestrian at the same instant in time as figure 9;
Figure 11 is a perspective view from the front and the left-hand side of an airbag in accordance with another embodiment, showing the airbag in an inflated condition;
Figure 12 is a side elevational view from the left-hand side, showing the airbag of figure 11 in its inflated condition;
Figure 13 is a schematic perspective view, from the front and left-hand side, of a motor vehicle having an pedestrian airbag arrangement in accordance with another embodiment of the present invention, the airbag arrangement comprising a pair of airbags which are illustrated in respective deployed positions relative to the vehicle; and
Figure 14 is a schematic elevational view showing the deployed positions of the airbags shown in figure 13 from the left-hand side of the motor vehicle.

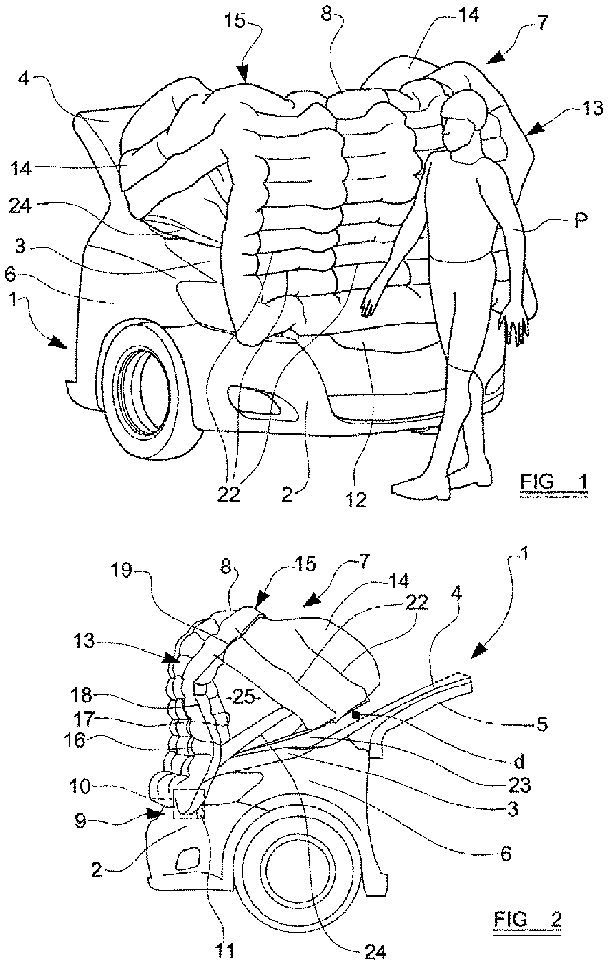

Turning now to consider the drawings in more detail, figures 1 and 2 illustrate the front region of a motor vehicle 1 having a front bumper 2, a hood 3, and a windscreen 4 which is mounted between a pair of structural A-pillars 5 on respective opposite sides of the vehicle. As will be appreciated from figure 2 in particular, the vehicle 1 also has a pair of front wings or fenders 6 which are located on respective opposite sides of the hood 3 and form part of the vehicle's bodywork in a conventional manner. The vehicle 1 is equipped with a pedestrian airbag arrangement 7 which, as will be explained in more detail, is configured to inflate into a deployed position as illustrated generally in figures 1 and 2 to provide protection to a pedestrian P in the event of impact with the vehicle 1.

The airbag arrangement of the embodiment illustrated in figures 1 and 2 comprises an airbag 8 which defines an inflatable volume for the receipt of inflating gas. It is envisaged that the airbag 8 will be provided in an initially tightly rolled and/or folded package as part of an airbag module 9, with the airbag module 9 being mounted to the motor vehicle 1 proximate a front edge region of the hood 3, as indicated schematically in figure 2. The airbag module 9 may comprise a housing 10 and an inflator 11, in a generally conventional manner, with the inflator 11 being fluidly connected to an inlet opening of the airbag 8 in order to direct a flow of inflating gas into the inflatable volume of the airbag 8 upon receipt of an actuating signal from a sensor configured to detect an impact between the vehicle 1 and a pedestrian P or the likely occurrence of such an impact. In some embodiments, the airbag module 9 may be arranged at the front of the vehicle 1 such that when the inflator 11 is actuated, the resulting flow of inflating gas into the initially packaged airbag 8 will cause the airbag to deploy outwardly through an aperture or flap in the front bumper 2 so as to assume its inflated and deployed configuration illustrated in figures 1 and 2. For example, the airbag 8 may deploy through the front grille 12 of the motor vehicle, as illustrated in figure 1.

Turning now to consider the configuration of the airbag 8 in more detail, it is to be noted that the airbag 8 comprises a number of discrete but fluidly interconnected chambers. In particular, the airbag 8 comprises a primary chamber 13 and a pair of substantially identical secondary chambers 14.

The primary chamber 13 is relatively large in both physical dimensions and its internal inflatable volume, and is configured for inflation upon deployment of the airbag 8, so as to adopt the inflated position illustrated in figures 1 and 2, in which it stands generally upwardly from a front region of the vehicle 1 and extends transversely across the motor vehicle, and preferably across substantially the full width of the motor vehicle. As will be appreciated from figures 1 and 2, when the primary chamber 13 is in its inflated position, an uppermost region 15 of the chamber 13 is spaced significantly above the hood 3 of the motor vehicle 1. In some embodiments, it is envisaged that the primary chamber 13 will configured such that when it is deployed into its inflated position, its uppermost region 15 will be spaced vertically above the ground by a distance which is either approximately equal to, or slightly greater than, the standing height of a 95-percentile human pedestrian.

In the particular embodiment illustrated, the primary chamber 13 of the airbag 8 is formed from two superimposed sheets 16, 17 of flexible material such as woven fabric, the sheets being interconnected around their peripheral edges by a seam 18, as illustrated most clearly in figure 2.

In contrast to the primary chamber 13, the secondary chambers 14 of the illustrated embodiment are relatively small in both physical dimensions and their internal inflatable volumes. The secondary chambers 14 are each physically and fluidly connected to the primary chamber 13 at opposite sides of the uppermost region 15 of the primary chamber 13 such that, when inflated, they adopt respective inflated positions in which they extend somewhat rearwardly and somewhat downwardly from the primary chamber 13, in spaced relationship to one another and at respective opposite sides of the motor vehicle 1, as will be explained in more detail hereinafter.

Each secondary chamber 14 may be formed from a pair of superimposed sheets of flexible material such as fabric, in a similar manner to the primary chamber 13, with the sheets being interconnected around their peripheral edges by a seam.

As illustrated most clearly in figure 2, the secondary chambers 14 are each physically connected, at their respective forwardmost regions, to the uppermost region 15 of the primary chamber 13 by respective interconnecting seams 19. It is envisaged that in preferred embodiments, the secondary chambers 14 will actually be connected, via their respective interconnecting seams 19, to the rear sheet 17 of the primary chamber 13. Fluid connection between each secondary chamber 14 and the primary chamber 13 may be achieved via the provision of one or more apertures formed in the rear sheet 17 of the primary chamber 13 and which are positioned so as to fall within the interconnecting seam 19 which physically connects the respective secondary chamber 14 to the primary chamber 13. In this manner, the apertures will serve as flow ports through which flows of inflating gas will be directed from the primary chamber 13 and into the secondary chambers 14, thereby inflating the secondary chambers 14 as the airbag 8 is deployed.

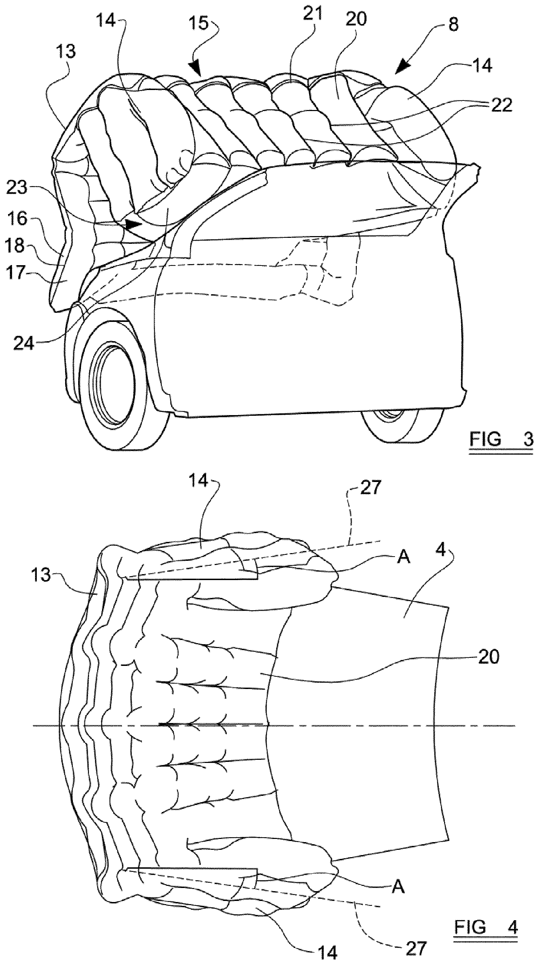

Turning now to consider figure 3, which shows the airbag 8 viewed from the rear in its inflated and deployed position, in some embodiments the airbag 8 may comprise an additional roof chamber 20. In the particular arrangement illustrated, the roof chamber 20 is formed from two sheets of superimposed flexible material, such as fabric, which are interconnected around at least part of their peripheral edges by a seam, in the same manner as the aforementioned primary and secondary chambers. Furthermore, it is to be noted that the roof chamber 20 is physically and fluidly connected to the uppermost region 15 of the primary chamber 13, so as to receive an inflating flow of gas from the primary chamber 13 upon deployment of the airbag 8, and to thereby inflate in such a manner as to extend generally rearwardly from the uppermost region 15 of the primary chamber 13 to adopt an inflated position in which it extends between the secondary chambers 14.

The roof chamber 20 is physically connected to the primary chamber 13 by an interconnecting seam 21, which serves to connect each sheet of the roof chamber 20 to the uppermost region of the rear sheet 17 of the primary chamber 13, and which in some embodiments may be implicated in the peripheral seam 18 of the primary chamber. Fluid connection between the roof chamber 20 and the primary chamber 13 may be achieved via the provision of one or more apertures formed in the uppermost region of the rear sheet of the primary chamber 13 and which are positioned so as to fall within the interconnecting seam 21 which physically connects the roof chamber 20 to the primary chamber 13. In this manner, the apertures will serve as flow ports through which flows of inflating gas will be directed from the primary chamber 13 and into the roof chamber, thereby inflating the roof chamber 20 substantially simultaneously with the secondary chambers 14, as the airbag 8 is deployed.

The constituent sheets of each inflatable chamber 13, 14, 20 of the airbag 8 may optionally be interconnected to one another in a manner known *per se* (for example by lines of stitching 22), so as to partially subdivide the inflatable volume of each chamber into a plurality of inflatable cells, as shown generally in figures 1 to 4.

In the embodiment illustrated in figures 1 to 3, the airbag arrangement 7 further comprises a tether arrangement 23 which is external to the inflatable volume of the airbag 8, as defined by the combined volumes of the primary chamber 13, the secondary chambers 14, and the roof chamber 20. The tether arrangement 23 is connected to the forwardmost and lowermost region of the primary chamber 13, and is connected to the rearmost edges of the secondary chambers 14 and the roof chamber 20. In the particular embodiment illustrated in figures 2 and 3, the tether arrangement 23 comprises a sheet 24 of flexible material such as fabric, and optionally similar fabric to that from which the aforementioned chambers are formed. The sheet 24 is connected to each chamber 13, 14, 20 along respective edges of the sheet 24. As will therefore be appreciated, in the embodiment illustrated, one edge of the sheet 24 is connected to a lower region of the rear sheet 17 of the primary chamber, and other edges of the sheet 24 are connected, respectively, to the innermost sheets of the secondary chambers 14, and the lowermost sheet of the roof chamber, for example via respective interconnecting seams.

When the airbag 8 is initially packaged inside the housing 10 of the airbag module 9, the tether sheet 24 will be folded and/or rolled with the airbag 8. However, when the airbag 8 is inflated upon deployment, the tether sheet 24 will unfurl so as to adopt the position illustrated generally in figures 2 and 3, in which it will serve to restrain the chambers 13, 14, 20 relative to one another and thus position them each in their respective inflated positions as illustrated.

Turning now to consider in more detail the relative inflated positions of the individual chambers 13, 14, 20 of the airbag 8, it will be noted that not only does the primary chamber 13 stand generally upwardly from the front region of the motor vehicle when inflated, in the manner of a protective wall, but in the embodiment illustrated it also adopts a somewhat S-shaped configuration when viewed from the side as shown in figure 2. From the front edge region of the vehicle's hood 3, the primary chamber 13 thus adopts a shape and position in which it leans rearwardly slightly, before then turning forwardly at approximately its mid-height, and then leaning rearwardly again in its uppermost region 15. This S-shape may be imparted to the chamber via a combination of its inherent construction (i.e. due to the shape and relative size of its constituent sheets 16, 17, and its peripheral seam 18) and the tether arrangement 23. Furthermore, it is to be noted that the tether arrangement 23 acts to position the primary chamber 13, the two secondary chambers 14, and the roof chamber 20 such that they cooperate to define a void 25 (illustrated in figure 2) therebetween, the void 25 thus being positioned above the hood 3 of the vehicle and behind the primary chamber 13.

Having particular regard to figure 2, the secondary chambers 14 and the tether arrangement 23 are furthermore configured such that when the secondary chambers 14 are located in their respective inflated positions, as illustrated, the secondary chambers 14 extend rearwardly and downwardly from the uppermost region 15 of the primary chamber 13, and terminate adjacent respective A-pillars, on respective opposite sides of the motor vehicle. More particularly, in the embodiment illustrated, it will be noted that the secondary chambers 14 become spaced from the respective A-pillars by a small distance d when in their inflated positions.

Figure 4 illustrates another preferred characteristic of the secondary chambers 14 when they are deployed into their respective inflated positions. As will be noted, the secondary chambers 14 both extend outwardly from the primary chamber 13 when in their respective inflated positions, so as to make equal but opposite acute angles A to the longitudinal axis 26 of the motor vehicle 1. More particularly, said acute angles A may be considered to be made between a principle axis 27 of each respective secondary chamber 14 and the longitudinal axis 26 of the vehicle 1.

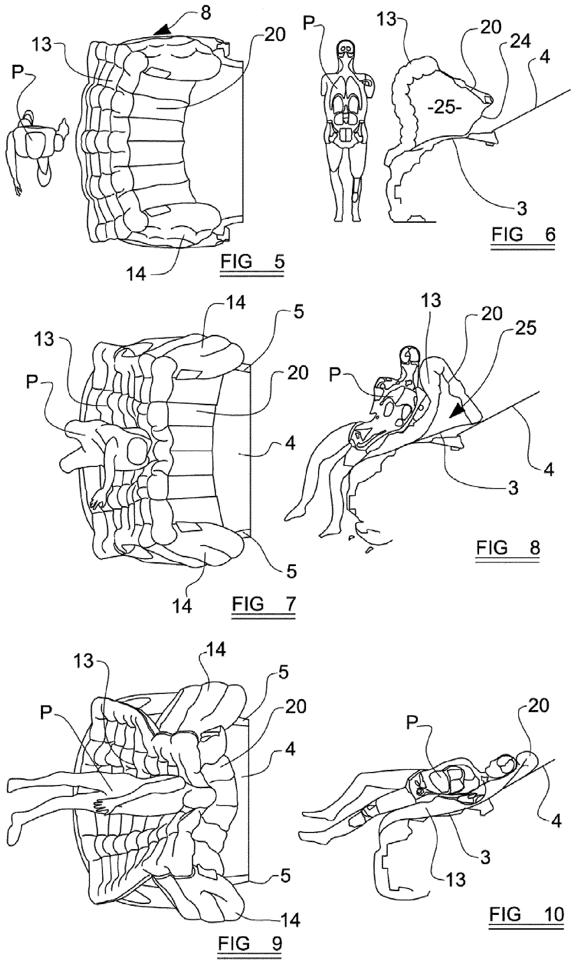

Turning now to consider figures 5 to 10, the behaviour and performance of the airbag 8 in providing protection to a pedestrian P will now be considered.

Figures 5 and 6 depict the airbag 8 in its fully inflated and deployed position, as described above, and show the motor vehicle 1 immediately prior to impact with the pedestrian P. It is to be noted, of course, that figure 5 depicts the airbag 8 in plan view from above, whilst figure 6 is a schematic cross-sectional view and thus shows the void 25 defined by the airbag 8, but not the secondary chambers 14 of the airbag 8.

Figures 7 and 8 depict the airbag 8 a short period of time (e.g. approximately 80 milliseconds) later, and after the motor vehicle has struck the pedestrian P. As will be noted, the pedestrian's torso makes initial contact with the upstanding primary chamber 13 of the airbag, and moves rearwardly relative to the vehicle 1 due to inertia. This causes the primary chamber 13 to lean rearwardly and to begin to buckle and fold under the force of impact with the pedestrian P, as illustrated, particularly in a transversely central region thereof. Nevertheless, some rearward movement occurs at the outer side regions of the primary chamber 13 also, and this is effective to urge the rearmost parts of the secondary chambers 14 towards and slidingly past the A-pillars 5 of the motor vehicle 1, due to their initial outwardly directed positions adjacent the A-pillars.

Figures 9 and 10 depict the airbag 8 after the passage of another period of time (e.g. approximately 80 milliseconds), and thus show the pedestrian's body thrown substantially entirely over the hood 3 of the motor vehicle 1. As will be noted, the primary chamber 13 is thus deformed so as to bear against the hood 3, in a transversely central region of the chamber, thereby substantially eliminating the void 25 which was initially defined above the hood 3 by the airbag 8. As will be appreciated from figure 9 in particular, the primary chamber 13 is sufficiently large to catch and wrap around the pedestrian's torso during the impact. Furthermore, it will be noted that the roof chamber 20 of the airbag has become folded underneath the uppermost region 15 of the primary chamber 13, thereby increasing the inflated thickness of the airbag 8 between the occupant's head and the windscreen 4 of the motor vehicle, whilst also increasing the effective length of the airbag in terms of its coverage over the windscreen 4 of the vehicle. Also, it will be noted that the significant rearwards movement of the primary chamber 13 has urged the secondary chambers 14 even further past the A-pillars 5 of the vehicle, in a sliding manner, which will create significant tension in the tether sheet 24 interconnecting the secondary chambers 14.

The above-mentioned sliding movement of the secondary chambers 14 past the respective A-pillars 5 of the motor vehicle, and the associated tension in the tether sheet 24 therebetween, serves to anchor the airbag 8 in a transverse sense, relative to the structure of the vehicle 1, thereby preventing the airbag 8 from being pushed sidewardly across the hood 3 and/or windscreen 4 of the motor vehicle under the force of impact with the pedestrian P.

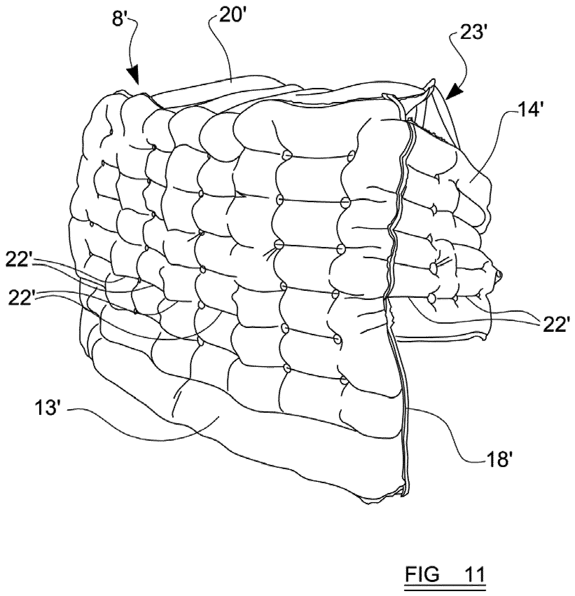

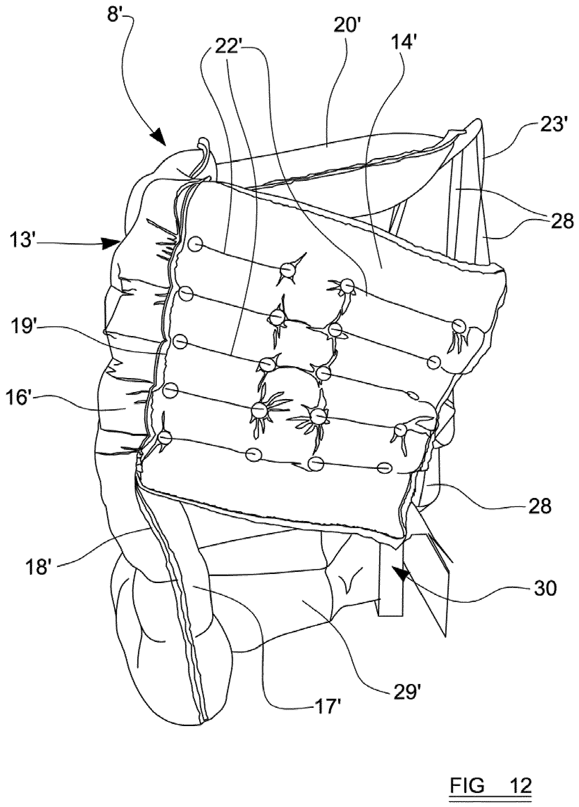

Figures 11 and 12 illustrate an airbag 8' in accordance with another embodiment of the present invention. The airbag 8' is similar in many respects to the airbag 8 described above and illustrated in figures 1 to 10, and so identical or similar aspects of the airbag 8' will not be described in detail again, and are denoted in figures 11 and 12 by corresponding reference numbers.

One of the principle differences between the airbag 8' illustrated in figures 11 and 12, compared to the one illustrated in figures 1 to 10, is that in the airbag 8' of figures 11 and 12 the tether arrangement 23' comprises a plurality of elongate flexible straps 28' rather than a single flexible sheet 24. The straps 28' may be provided in the form of woven webbing straps, of a type known *per se,* but nevertheless provide the same function as the tether sheet 24 of the previously described embodiment. The straps 28' may be arranged to cross one another and/or to be connected to one another (for example by stitching) so as to define a net-like tether arrangement between the discrete chambers 13', 14', 20' of the airbag 8'.

Another significant difference in the airbag 8' illustrated in figures 11 and 12, is that it comprises an additional chamber in the form of a base chamber 29'. The base chamber 29' is provided at the bottom of the airbag 8' as a whole, and is physically and fluidly connected to the primary chamber 13' at the lowermost region thereof. More specifically, in the particular airbag 8' illustrated, the base chamber 29' is physically connected to the lowermost region of the rear sheet 17' of the primary chamber, by an interconnecting seam. As will therefore be appreciated, in a similar manner to the secondary chambers 14' and the roof chamber 20', the base chamber 20' may be fluidly connected to the primary chamber 13' via one or more flow apertures provided in the rear sheet 17' of the primary chamber 13', the apertures thus defining flow ports for the flow of inflating gas.

It is envisaged that in this type of arrangement, the gas flow inlet of the airbag 8' as a whole will be provided in the base chamber 29', as indicated generally at 30' in figure 12. It will thus be appreciated that when the inflator, to which the airbag 8' will be connected when installed as part of an airbag module in the front region of a motor vehicle, is actuated the base chamber 29' will be the first chamber to inflate, thereby deploying forwardly from the airbag module. As will be appreciated with regard to figure 12, when the entire airbag 8' is substantially fully inflated as illustrated, the base chamber 29' will thus be effective to space the primary chamber 13' of the airbag forwardly of the front bumper 2 and the front edge of the vehicle's hood 3. In this manner, the inflated position of the primary chamber 13' will be located more forwardly than in the case of the airbag 8 illustrated in figures 1 to 10. It is therefore envisaged that in some versions of this embodiment, the secondary chambers 14' may be longer than in the case of the previous embodiment, so that they will still terminate adjacent the A-pillars 5 of the vehicle. Alternatively, the secondary chambers 14' of this embodiment may be sized and configured to deploy into inflated positions in which they terminate adjacent side edges of the vehicle's hood 3, and/or adjacent the front wings/fenders 6 of the vehicle.

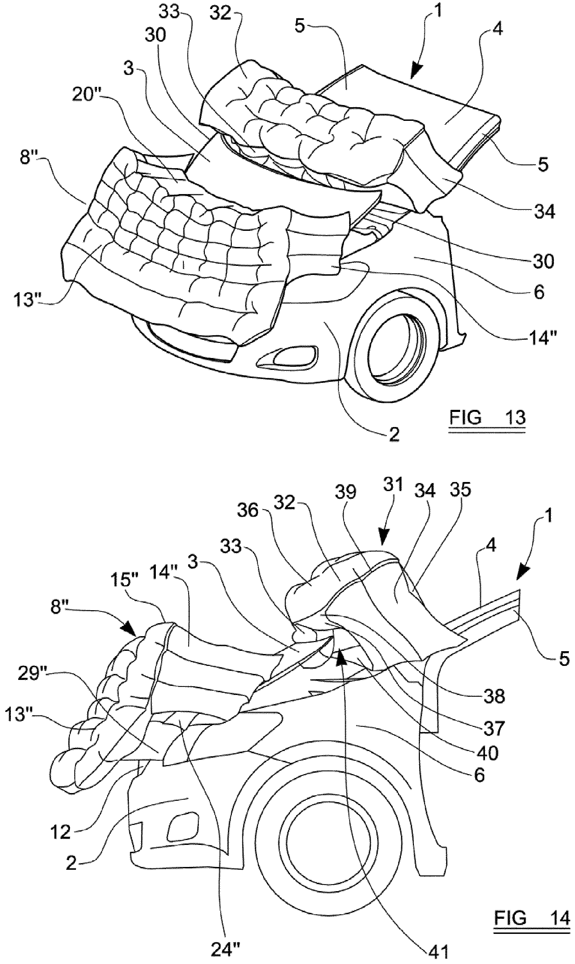

Figures 13 and 14 illustrate another airbag arrangement in accordance with another embodiment of the present invention, and depict the airbag arrangement in a fully deployed and inflated condition on a motor vehicle 1. It is envisaged that this type of airbag arrangement will be suited for use in combination with a hood-lifting arrangements, and so figures 13 and 14 also show the rear of the hood 3 in a raised position, in a manner known *per se* in the field of pedestrian impact protection.

As will be immediately noted, the airbag arrangement illustrated in figures 13 and 14 actually comprises two discrete airbags. The first, and more forwardly located, of the two airbags is denoted 8" in figures 13 and 14, and is similar in many respects to the airbag 8 described above and illustrated in figures 1 to 10. As will be noted, the first airbag 8" thus comprises a primary chamber 13", a pair of secondary chambers 14", and a roof chamber 20", but additionally comprises a base chamber 29" similar to that of the embodiment illustrated in figures 11 and 12. The first airbag 8" is thus arranged such that, upon deployment, its base chamber 29" will inflate first, to extend forwardly from the front bumper 2 or grille 12 of the motor vehicle, and will thus space the primary chamber 13" somewhat forwardly of the front bumper 2 when it is fully inflated. The tether arrangement of the first airbag 8" illustrated in figures 13 and 14 is provided in the form of a flexible tether sheet 24" similar to that of the embodiment illustrated in figures 1 to 10. However, in this embodiment the tether sheet 24" is connected along its forwardmost edge to the base chamber 29" instead of the primary chamber 13", although it could alternatively be connected to the primary chamber 13".

As will also be noted, first airbag 8" of the embodiment illustrated in figures 13 and 14 is somewhat smaller than the airbag 8 illustrated in figures 1 to 10. In particular, the primary chamber 13" is approximately half the height, when inflated, as the primary chamber 13 of the first embodiment. The primary chamber 13" is, nevertheless, of substantially equal width to that illustrated in figures 1 to 10.

As will be appreciated, when the first airbag 8" is fully inflated as shown in figures 13, 14, its primary chamber 13" will stand upwardly and lean somewhat rearwardly from a front region of the motor vehicle, such that its uppermost region 15" is spaced above the front region of the vehicle's hood 3. The secondary chambers 14" extend rearwardly and downwardly from the uppermost region 15" the primary chamber 13", so as to terminate adjacent respective side edges 30 of the vehicle's hood 3, in its raised position, and also generally adjacent respective front wings/fenders 6 of the vehicle 1. It is proposed that the secondary chambers 14" and the tether sheet 24" may be configured to position the secondary chambers 14", when inflated, such that they extend outwardly from the primary chamber 13", so as to make equal but opposite acute angles to the longitudinal axis of the motor vehicle, in a similar manner to the secondary chambers 14 of the previously described embodiments.

It is to be noted that the above-described positioning of the secondary chambers 14" ensures that, as the first airbag 8" is deflected and deformed by impact with a pedestrian in the manner described above, the secondary chambers 14" will slide outwardly past the respective side edges 30 of the hood 3 and the upper regions of the front wings/fenders 6 of the vehicle 1, in order to provide a similar anchoring function as the secondary chambers 14 of the previously described embodiment.

Turning now to consider in more detail the additional airbag 31, it will be noted that this airbag is configured for inflation upon deployment so as to extend across the windscreen 4 of the motor vehicle 1. It is therefore proposed that the additional airbag 31 will initially be provided in an initially tightly rolled and/or folded package as part of an airbag module mounted beneath the rear edge region of the hood 3 when the hood is located in its normal, closed, position. For example, it is envisaged that the additional airbag module may be mounted to the structure of the vehicle beneath the rear edge of the hood 3, or even to the underside of the hood 3 itself.

The additional airbag 31 may be considered similar to the first airbag 8" in terms of its general configuration, and in particular in the sense that it also comprises a number of discrete but fluidly and physically interconnected chambers. The additional airbag 31 comprises a main chamber 32, a base chamber 33, a pair of substantially identical secondary chambers 34 (only one visible in figures 13 and 14), and a roof chamber 35.

The main chamber 32 is relatively large, in both physical dimensions and its internal inflatable volume, in comparison to the other chambers of the additional airbag 31, but is nevertheless somewhat smaller in both respects than the primary chamber 13" of the first airbag 8". The main chamber 32 is configured for inflation upon deployment of the airbag 31 so as to adopt the inflated position illustrated in figures 13 and 14 in which it extends transversely across the vehicle 1 in spaced relation above a forwardmost region of the vehicle's windscreen 4.

In the particular embodiment illustrated, the main chamber 32 of the additional airbag 31 is formed from two superimposed sheets 36, 37 of flexible material such as woven fabric, the sheets being interconnected around their peripheral edges by a seam 38, as illustrated most clearly in figure 13. As will therefore be appreciated, the main chamber 32 of the additional airbag 31 is thus formed in substantially the same manner as the primary chamber 13" of the first airbag 8".

The base chamber 33 of the additional airbag 31 is formed in a similar manner to the base chamber 29" of the first airbag 8" and is thus fluidly and physically connected to the main chamber 32 in the same manner, and is configured to receive a flow of inflating gas directly from an inflator and to inflate generally upwardly from the airbag module upon actuation. As will be noted from figure 14, in the embodiment illustrated, the base chamber 33 is thus configured to space the main chamber 32 above the rear edge of the raised hood 3, and thus also above the forwardmost region of the vehicle's windscreen 4.

In contrast to the main chamber 32, the side chambers 34 of the additional airbag 31 are relatively small in both physical dimensions and their internal inflatable volumes. The side chambers 34 are each physically and fluidly connected to the main chamber 32 at opposite sides of the main chamber 34 such that, when inflated, they adopt respective inflated positions in which they extend somewhat rearwardly and somewhat downwardly from the main chamber 34, in spaced relationship to one another and at respective opposite sides of the motor vehicle 1, as will be explained in more detail hereinafter.

Each side chamber 34 may be formed from a pair of superimposed sheets of flexible material such as fabric, in a similar manner to the main chamber 34, with the sheets being interconnected around their peripheral edges by a seam.

The side chambers 34 are each physically connected, at their respective forwardmost regions, to the main chamber by respective interconnecting seams 39. It is envisaged that in preferred embodiments, the side chambers 34 will actually be connected, via their respective interconnecting seams 39, to the rear sheet 37 of the main chamber 32. Fluid connection between each side chamber 34 and the main chamber 32 may be achieved via the provision of one or more apertures formed in the rear sheet 37 of the main chamber 34 and which are positioned so as to fall within the interconnecting seam 39 which physically connects the respective side chamber 14 to the main chamber 32. In this manner, the apertures will serve as flow ports through which flows of inflating gas will be directed from the main chamber 32 and into the side chambers 34, thereby inflating the side chambers 34 as the additional airbag 31 is deployed. It is envisaged that the airbag arrangement will configured such that the first airbag 8" and the additional airbag 31 will both be inflated substantially simultaneously, by respective inflators, upon actuation of the airbag arrangement.

The roof chamber 35 is optional, and may be physically connected to the main chamber 32 by an interconnecting seam in a similar manner to the roof chambers of the previous embodiments. The interconnecting seam is not visible in figures 13 and 14, but serves to connect each sheet of the roof chamber 35 to the uppermost region of the rear sheet 37 of the main chamber 32, and in some embodiments may be implicated in the peripheral seam 38 of the main chamber. Fluid connection between the roof chamber 35 and the main chamber 32 may be achieved via the provision of one or more apertures formed in the uppermost region of the rear sheet 37 of the main chamber 32 and which are positioned so as to fall within the interconnecting seam which physically connects the roof chamber 35 to the main chamber 32. In this manner, the apertures will serve as flow ports through which flows of inflating gas will be directed from the main chamber 32 and into the roof chamber 35, thereby inflating the roof chamber 35 substantially simultaneously with the side chambers 34, as the airbag 31 is deployed.

In the embodiment illustrated in figures 13 and 14, the additional airbag 31 is associated with a tether arrangement 40 which is external to the inflatable volume of the airbag 31, as defined by the combined volumes of the main chamber 32, the base chamber 33, the side chambers 34, and the roof chamber 35. The tether arrangement 40 is connected to the lowermost region of the base chamber 33, and is connected to the lowermost edges of the side chambers 34 and the roof chamber 35. In the particular embodiment illustrated in figures 13 and 14, the tether arrangement 40 comprises a sheet of flexible material such as fabric, and optionally similar fabric to that from which the aforementioned chambers are formed. The sheet is connected to each chamber 33, 34, 35 along respective edges of the sheet. It is to be appreciated, however, that the tether sheet 40 could be replaced by a plurality of tether straps (as indeed could the tether sheet 24" of the first airbag 8"), in a similar manner to that described with reference to the embodiment illustrated in figures 11 and 12.

Turning now to consider in more detail the relative inflated positions of the main, side and roof chambers 32, 34, 35 of the additional airbag 31, it will be noted that the main chamber 32 thus adopts position in which it is spaced above the rearmost edge of the raised hood 3 and in which it leans rearwardly slightly so as also to be spaced above the forwardmost region of the windscreen 4. Furthermore, it is to be noted that the tether arrangement 40 acts to position the main chamber 32, the base chamber 33, the two side chambers 34, and the roof chamber 35 such that they cooperate to define a void 41 (illustrated in figure 14) therebetween, the void 41 thus being positioned immediately behind the rear edge of the hood 3 and above the windscreen 4.

The side chambers 34 and the tether arrangement 40 are furthermore configured such that when the side chambers 34 are located in their respective inflated positions, as illustrated, the side chambers 34 extend rearwardly and downwardly from the main chamber 32, and terminate adjacent respective A-pillars 5, on respective opposite sides of the motor vehicle. The side chambers 34 both preferably extend outwardly from the main chamber 32 when in their respective inflated positions, so as to make equal but opposite acute angles to the longitudinal axis of the motor vehicle 1, in a similar manner to the secondary chambers 14" of the first airbag 8". It is to be noted that the above-described positioning of the side chambers 34 ensures that, as the additional airbag 31 is deflected and deformed by impact with a pedestrian, the side chambers 34 will slide outwardly past the respective A-pillars 5 of the vehicle 1, in order to provide a similar anchoring function as the secondary chambers 14 of the previously described embodiments.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A motor vehicle (1) having a hood (3), a windscreen (4) and a pedestrian airbag arrangement (7); the airbag arrangement (7) having an airbag (8, 8', 8") defining an inflatable volume for the receipt of inflating gas; said inflatable volume comprising: a primary chamber (13, 13', 13") configured for inflation upon deployment of the airbag so as to adopt an inflated position in which it stands generally upwardly from a front region of the motor vehicle (1) and extends transversely across the motor vehicle (1) such that an uppermost region (15) of the primary chamber (13) is spaced above the hood (3) of the vehicle (1); and a pair of secondary chambers (14, 14', 14") configured for inflation upon deployment of the airbag so as to adopt respective inflated positions in which they: i) extend generally rearwardly from the primary chamber (13, 13', 13") in spaced relationship to one another and at respective opposite sides of the motor vehicle (1); and ii) terminate adjacent respective opposite side regions (5, 6) of the motor vehicle's structure.

2. A motor vehicle according to claim 1, wherein said secondary chambers (14, 14', 14") each extend generally downwardly from said primary chamber (13, 13', 13") when in their respective inflated positions.

3. A motor vehicle according to claim 1, wherein said secondary chambers (14, 14', 14") each extend outwardly from said primary chamber (13, 13', 13") when in their respective inflated positions, so as to make an acute angle (A) to a longitudinal axis (26) of the motor vehicle (1).

4. A motor vehicle according to any preceding claim, wherein the airbag (8, 8', 8") is provided packaged in an airbag module (9) proximate a front edge region of the hood (3).

5. A motor vehicle according to claim 4, wherein said secondary chambers (14, 14', 14") each extend from a respective upper region of said primary chamber (13, 13', 13") when the primary chamber (13, 13', 13") is in said inflated position.

6. A motor vehicle according to any preceding claim, wherein said secondary chambers (14, 14', 14") are configured to slide outwardly past said respective side regions (5, 6) of the motor vehicle's structure upon rearwards deflection of said primary chamber (13, 13', 13") arising from impact with a pedestrian (P).

7. A motor vehicle according to any preceding claim, wherein said airbag (8, 8', 8") further comprises a roof chamber (20, 20', 20") configured for inflation upon deployment of the airbag so as to extend generally rearwardly from an uppermost region of the primary chamber (13, 13', 13") to adopt an inflated position in which it extends between said secondary chambers (14, 14', 14") ; wherein said primary chamber (13, 13', 13"), said roof chamber (20, 20', 20"), and said secondary chambers (14, 14', 14") cooperate to define a void (25) above the vehicle (1) and behind said primary chamber (13, 13', 13") upon deployment of the airbag.

8. A motor vehicle according to any preceding claim, wherein the airbag arrangement (7) further comprises a tether arrangement (23, 23') external to said inflatable volume; the tether arrangement (23, 23') being connected to said primary chamber (13, 13', 13") and to each said secondary chamber (14, 14', 14"), and configured to position said secondary chambers (14, 14', 14") in their said respective inflated positions upon inflation of the airbag (8, 8', 8").

9. A motor vehicle according to claim 8, as dependent upon claim 7, wherein said tether arrangement (23, 23') is additionally connected to said roof chamber (20, 20', 20") and is configured to position the roof chamber (20, 20', 20") in its said inflated position upon inflation of the airbag.

10. A motor vehicle according to claim 8 or claim 9, wherein said tether arrangement (23') comprises a plurality of flexible straps (28').

11. A motor vehicle according to claim 8 or claim 9, wherein said tether arrangement comprises a sheet of flexible material (24, 24") which is connected to said chambers along respective side edges of the sheet (24, 24").

12. A motor vehicle according to any preceding claim, wherein said side regions of the motor vehicle's structure, adjacent which said rearwardly extending secondary chambers (14, 14') terminate when in said inflated positions, are A-pillars (5) of the motor vehicle (1).

13. A motor vehicle according to any one of claims 1 to 11, wherein said side regions of the motor vehicle's structure, adjacent which said rearwardly extending secondary chambers (14") terminate when in said inflated positions, are: side edges of the vehicle's hood (3); or front wings/fenders (6) of the motor vehicle (1).

14. A motor vehicle according to any one of claims 1 to 11, or claim 13, wherein said airbag arrangement (7) comprises an additional airbag (31), the additional airbag (31) being configured for inflation upon deployment so as to extend across at least part of the windscreen (1).

15. A motor vehicle according to claim 14, wherein said additional airbag (31) defines an inflatable volume for the receipt of inflating gas and comprises: a main chamber (32) configured for inflation upon deployment of the airbag so as to adopt an inflated position in which it extends transversely across the motor vehicle (1); and a pair of side chambers (34) configured for inflation upon deployment of the airbag so as to adopt respective inflated positions in which they: i) extend generally rearwardly and/or downwardly from the main chamber (32) in spaced relationship to one another and at respective opposite sides of the motor vehicle (1); and ii) terminate adjacent respective A-pillars (5) of the motor vehicle (1).

## Patentansprüche

1. Kraftfahrzeug (1) mit einer Haube (3), einer Windschutzscheibe (4) und einer Fußgängerairbaganordnung (7);
wobei die Airbaganordnung (7) einen Airbag (8, 8', 8") aufweist, der ein Luftvolumen zum Aufnehmen von Füllgas definiert;
wobei das Luftvolumen umfasst:
eine Primärkammer (13, 13', 13"), die zum Befüllen beim Entfalten des Airbags konfiguriert ist, um eine gefüllte Position einzunehmen, in der sie im Allgemeinen von einem vorderen Bereich des Kraftfahrzeugs (1) nach oben steht und sich derart quer über das Kraftfahrzeug (1) erstreckt, dass ein oberster Bereich (15) der Primärkammer (13) über der Haube (3) des Fahrzeugs (1) beabstandet ist; und
ein Paar von Sekundärkammern (14, 14', 14"), die zum Befüllen beim Entfalten des Airbags konfiguriert sind, um jeweilige gefüllte Positionen einzunehmen, in denen sie:
i) sich von der Primärkammer (13, 13', 13") in einem Abstand voneinander und an jeweiligen gegenüberliegenden Seiten des Kraftfahrzeugs (1) im Allgemeinen nach hinten erstrecken; und
ii) angrenzende jeweilige gegenüberliegende Seitenbereiche (5, 6) der Kraftfahrzeugstruktur abschließen.

2. Kraftfahrzeug nach Anspruch 1, wobei die Sekundärkammern (14, 14', 14") sich jeweils im Allgemeinen von der Primärkammer (13, 13', 13") nach unten erstrecken, wenn sie in ihren jeweiligen gefüllten Positionen sind.

3. Kraftfahrzeug nach Anspruch 1, wobei die Sekundärkammern (14, 14', 14") sich jeweils von der Primärkammer (13, 13', 13") nach außen erstrecken, wenn sie in ihren jeweiligen gefüllten Positionen sind, um einen spitzen Winkel (A) zu einer Längsachse (26) des Kraftfahrzeugs (1) zu bilden.

4. Kraftfahrzeug nach einem der vorhergehenden Ansprüche, wobei der Airbag (8, 8', 8") in einem Airbagmodul (9) in der Nähe eines vorderen Randbereiches der Haube (3) verpackt bereitgestellt ist.

5. Kraftfahrzeug nach Anspruch 4, wobei die Sekundärkammern (14, 14', 14") sich jeweils von einem jeweiligen oberen Bereich der Primärkammer (13, 13', 13") erstrecken, wenn die Primärkammer (13, 13', 13") in der gefüllten Position ist.

6. Kraftfahrzeug nach einem der vorhergehenden Ansprüche, wobei die Sekundärkammern (14, 14', 14") konfiguriert sind, um nach außen an den jeweiligen Seitenbereichen (5, 6) der Kraftfahrzeugstruktur vorbei zu gleiten, bei einer Rückablenkung der Primärkammer (13, 13', 13"), die aus dem Aufprall mit einem Fußgänger (P) entsteht.

7. Kraftfahrzeug nach einem der vorhergehenden Ansprüche, wobei der Airbag (8, 8', 8") ferner eine Dachkammer (20, 20', 20") umfasst, die zum Befüllen beim Entfalten des Airbags konfiguriert ist, um sich im Allgemeinen von einem obersten Bereich der Primärkammer (13, 13', 13") nach hinten zu erstrecken, um eine gefüllte Position einzunehmen, in der sie sich zwischen den Sekundärkammern (14, 14', 14") erstreckt;
wobei die Primärkammer (13, 13', 13"), die Dachkammer (20, 20', 20") und die Sekundärkammern (14, 14', 14") zusammenwirken, um beim Entfalten des Airbags einen Hohlraum (25) über dem Fahrzeug (1) und hinter der Primärkammer (13, 13', 13") zu definieren.

8. Kraftfahrzeug nach einem der vorhergehenden Ansprüche, wobei die Airbaganordnung (7) ferner eine Halteseilanordnung (23, 23') außerhalb des Luftvolumens umfasst;
wobei die Halteseilanordnung (23, 23') mit der Primärkammer (13, 13', 13") und mit jeder Sekundärkammer (14, 14', 14") verbunden ist und konfiguriert ist, um die Sekundärkammern (14, 14', 14") beim Befüllen des Airbags (8, 8', 8") in ihre jeweiligen gefüllten Positionen zu positionieren.

9. Kraftfahrzeug nach Anspruch 8, wenn abhängig von Anspruch 7, wobei die Halteseilanordnung (23, 23') zusätzlich mit der Dachkammer (20, 20', 20") verbunden ist und konfiguriert ist, um die Dachkammer (20, 20', 20") beim Befüllen des Airbags in ihre aufgefüllte Position zu positionieren.

10. Kraftfahrzeug nach Anspruch 8 oder 9, wobei die Halteseilanordnung (23') mehrere flexible Bänder (28') umfasst.

11. Kraftfahrzeug nach Anspruch 8 oder 9, wobei die Halteseilanordnung eine Folie aus flexiblem Material (24, 24") umfasst, die entlang der jeweiligen Seitenkanten der Folie (24, 24") mit den Kammern verbunden ist.

12. Kraftfahrzeug nach einem der vorhergehenden Ansprüche, wobei die Seitenbereiche der Kraftfahrzeugstruktur, angrenzend an die die sich nach hinten erstreckenden Sekundärkammern (14, 14') abschließen, wenn sie in den gefüllten Positionen sind, A-Säulen (5) das Kraftfahrzeugs (1) sind.

13. Kraftfahrzeug nach einem der Ansprüche 1 bis 11, wobei die Seitenbereiche der Kraftfahrzeugstruktur, angrenzend an die die sich nach hinten erstreckenden Sekundärkammern (14") abschließen, wenn sie in den gefüllten Positionen sind, Folgendes sind:
Seitenkanten der Fahrzeughaube (3); oder
vordere Kotflügel/Schutzbleche (6) des Kraftfahrzeugs (1).

14. Kraftfahrzeug nach einem der Ansprüche 1 bis 11 oder 13, wobei die Airbaganordnung (7) einen zusätzlichen Airbag (31) umfasst, wobei der zusätzliche Airbag (31) zum Befüllen beim Entfalten konfiguriert ist, um sich über wenigstens einen Teil der Windschutzscheibe (1) zu erstrecken.

15. Kraftfahrzeug nach Anspruch 14, wobei der zusätzliche Airbag (31) ein Luftvolumen zum Aufnehmen von Füllgas definiert und Folgendes umfasst:
eine Hauptkammer (32), die zum Befüllen beim Entfalten des Airbags konfiguriert ist, um eine aufgefüllte Position einzunehmen, in der sie sich quer über das Kraftfahrzeug (1) erstreckt; und
ein Paar von Seitenkammern (34), die zum Befüllen beim Entfalten des Airbags konfiguriert sind, um jeweilige gefüllte Positionen einzunehmen, in denen sie:
i) sich von der Hauptkammer (32) in einem Abstand voneinander und an jeweiligen gegenüberliegenden Seiten des Kraftfahrzeugs (1) im Allgemeinen nach hinten und/oder nach unten erstrecken; und
ii) angrenzende jeweilige A-Säulen (5) des Kraftfahrzeugs (1) abschließen.

## Revendications

1. Véhicule automobile (1) présentant un capot (3), un pare-brise (4) et un agencement de coussin de sécurité gonflable pour piétons (7) ;
l'agencement de coussin de sécurité gonflable (7) présentant un coussin de sécurité gonflable (8, 8', 8") définissant un volume gonflable disponible pour la réception de gaz de gonflage ; ledit volume gonflable comprenant :
une chambre primaire (13, 13', 13") conçue pour se gonfler lors du déploiement du coussin de sécurité gonflable, de manière à adopter une position gonflée dans laquelle elle se place généralement vers le haut à partir d'une zone avant du véhicule automobile (1) et s'étend transversalement de part et d'autre du véhicule automobile (1) de telle manière qu'une zone supérieure (15) de la chambre primaire (13) est espacée au-dessus du capot (3) du véhicule (1) ; et
une paire de chambres secondaires (14, 14', 14") conçues pour se gonfler lors du déploiement du coussin de sécurité gonflable de manière à adopter des positions gonflées respectives dans lesquelles elles :
i) s'étendent, de manière générale, vers l'arrière à partir de la chambre primaire (13, 13 ', 13 "), étant espacées l'une de l'autre, et au niveau de côtés respectivement opposés du véhicule automobile (1) ; et
ii) se terminent à proximité des zones latérales respectivement opposées (5, 6) de la structure du véhicule automobile.

2. Véhicule automobile selon la revendication 1, dans lequel lesdites chambres secondaires (14, 14', 14") s'étendent chacune généralement vers le bas à partir de ladite chambre primaire (13, 13 ', 13 ") lorsqu'elles occupent leurs positions gonflées respectives.

3. Véhicule automobile selon la revendication 1, dans lequel lesdites chambres secondaires (14, 14', 14") s'étendent chacune vers l'extérieur à partir de ladite chambre primaire (13, 13', 13 ") lorsque dans leurs positions gonflées respectives, de manière à former un angle aigu (A) avec un axe longitudinal (26) du véhicule automobile (1).

4. Véhicule automobile selon l'une quelconque des revendications précédentes, dans lequel le coussin de sécurité gonflable (8, 8', 8") est fourni emballé dans un module de coussin de sécurité gonflable (9) à proximité d'une zone de bord avant du capot (3).

5. Véhicule automobile selon la revendication 4, dans lequel lesdites chambres secondaires (14, 14', 14 ") s'étendent chacune à partir d'une zone supérieure respective de ladite chambre primaire (13, 13', 13 ") lorsque la chambre primaire (13, 13', 13 ") est dans ladite position gonflée.

6. Véhicule automobile selon l'une quelconque des revendications précédentes, dans lequel lesdites chambres secondaires (14, 14', 14 ") sont conçues pour coulisser vers l'extérieur devant lesdites zones latérales respectives (5, 6) de la structure du véhicule automobile lors de la déviation vers l'arrière de ladite chambre primaire (13, 13 ', 13 ") résultant d'un choc avec un piéton (P).

7. Véhicule automobile selon l'une quelconque des revendications précédentes, dans lequel ledit coussin de sécurité gonflable (8, 8 ', 8 ") comprend en outre une chambre formant toit (20, 20 ', 20 ") conçue pour se gonfler lors du déploiement du coussin de sécurité gonflable de manière à s'étendre généralement vers l'arrière à partir de la zone supérieure de la chambre primaire (13, 13 ', 13 ") pour adopter une position gonflée dans laquelle elle s'étend entre lesdites chambres secondaires (14, 14', 14 ") ;
dans lequel ladite chambre primaire (13, 13 ', 13 "), ladite chambre formant toit (20, 20 ', 20 ") et lesdites chambres secondaires (14, 14', 14 ") coopèrent pour définir une cavité (25) au-dessus du véhicule (1) et derrière ladite chambre primaire (13, 13', 13 ") lors du déploiement du coussin de sécurité gonflable.

8. Véhicule automobile selon l'une quelconque des revendications précédentes, dans lequel l'agencement de coussin de sécurité gonflable (7) comprend en outre un agencement d'attache (23, 23 ') qui est extérieur audit volume gonflable ;
l'agencement d'attache (23, 23 ') étant relié à ladite chambre primaire (13, 13 ', 13 ") et à chacune desdites chambres secondaires (14, 14', 14 "), et conçu pour positionner lesdites chambres secondaires (14, 14', 14") dans lesdites positions respectives gonflées de celles-ci lors du gonflage du coussin de sécurité gonflable (8, 8', 8").

9. Véhicule automobile selon la revendication 8, comme dépendant de la revendication 7, dans lequel ledit agencement d'attache (23, 23 ') est en outre relié à ladite chambre formant toit (20, 20 ', 20 ") et est conçu pour positionner la chambre formant toit (20, 20 ', 20 ") dans sa position gonflée lors du gonflage du coussin de sécurité gonflable.

10. Véhicule automobile selon la revendication 8 ou la revendication 9, dans lequel ledit agencement d'attache (23 ') comprend une pluralité de sangles flexibles (28').

11. Véhicule automobile selon la revendication 8 ou la revendication 9, dans lequel ledit agencement d'attache comprend une feuille de matériau flexible (24, 24 ") qui est reliée auxdites chambres le long des bords latéraux respectifs de la feuille (24, 24 ").

12. Véhicule automobile selon une quelconque revendication précédente, dans lequel lesdites zones latérales de la structure du véhicule automobile, à proximité desquelles lesdites chambres secondaires (14, 14 ') s'étendant vers l'arrière se terminent lorsqu'elles se trouvent dans lesdites positions gonflées, sont des montants avant (5) du véhicule automobile (1).

13. Véhicule automobile selon l'une quelconque des revendications 1 à 11, dans lequel lesdites zones latérales de la structure du véhicule automobile, à proximité desquelles lesdites chambres secondaires (14 ") s'étendant vers l'arrière se terminent lorsqu'elles se trouvent dans lesdites positions gonflées, sont :
des bords latéraux du capot du véhicule (3) ; ou
des ailes ou pare-chocs avant (6) du véhicule automobile (1).

14. Véhicule automobile selon l'une quelconque des revendications 1 à 11 ou 13, dans lequel ledit agencement de coussin de sécurité gonflable (7) comprend un coussin de sécurité gonflable supplémentaire (31), le coussin de sécurité gonflable supplémentaire (31) étant conçu pour se gonfler lors de son déploiement de manière à s'étendre au moins de part et d'autre d'une partie du pare-brise (1).

15. Véhicule automobile selon la revendication 14, dans lequel ledit coussin de sécurité gonflable supplémentaire (31) définit un volume gonflable disponible pour la réception de gaz de gonflage et comprend :
une chambre principale (32) conçue pour se gonfler lors du déploiement du coussin de sécurité gonflable de manière à adopter une position gonflée dans laquelle elle s'étend transversalement de part et d'autre du véhicule automobile (1) ; et
une paire de chambres latérales (34) conçues pour se gonfler lors du déploiement du coussin de sécurité gonflable de manière à adopter des positions gonflées respectives dans lesquelles elles :
i) s'étendent généralement vers l'arrière et/ou vers le bas à partir de la chambre principale (32), étant espacées l'une de l'autre et au niveau de côtés respectivement opposés du véhicule automobile (1) ; et
ii) se terminent à proximité des montants avant (5) du véhicule automobile (1).
